(19) Europäisches Patentamt
European Patent Office
Office européen des brevets

(11) EP 0 569 903 B1

(12) EUROPÄISCHE PATENTSCHRIFT

(45) Veröffentlichungstag und Bekanntmachung des Hinweises auf die Patenterteilung:
**03.01.1996 Patentblatt 1996/01**

(51) Int Cl.⁶: **C08F 8/30**, G02F 1/35

(21) Anmeldenummer: **93107552.7**

(22) Anmeldetag: **10.05.1993**

# (54) Verfahren zur Herstellung von Polymeren mit NLO-aktiven Seitengruppen und deren Verwendung

Process for the manufacture of polymers having NLO-active side groups and use thereof

Procédé de préparation de polymères ayant des groupes latéraux NLO-actifs et leur application

(84) Benannte Vertragsstaaten:
**BE CH DE ES FR GB IT LI NL**

(30) Priorität: **13.05.1992 DE 4215357**

(43) Veröffentlichungstag der Anmeldung:
**18.11.1993 Patentblatt 1993/46**

(73) Patentinhaber: **BASF Aktiengesellschaft**
**D-67063 Ludwigshafen (DE)**

(72) Erfinder:
- **Etzbach, Karl-Heinz, Dr.**
  **W-6710 Frankenthal (DE)**
- **Kilburg, Heike, Dr.**
  **W-6720 Speyer (DE)**
- **Mueller, Harry**
  **W-8860 Muenchberg (DE)**
- **Nuyken, Oskar, Prof. Dr.**
  **W-8000 München 81 (DE)**
- **Strohriegl, Peter, Dr.**
  **W-8581 Hummeltal (DE)**

(56) Entgegenhaltungen:
**EP-A- 0 244 288** **EP-A- 0 244 288**
**EP-A- 0 410 205** **EP-A- 0 482 985**

- **DIE MAKROMOLEKULARE CHEMIE, RAPID COMMUNICATIONS Bd. 13, Nr. 2, Februar 1992, BASEL, CH Seiten 125 - 133 H. M]LLER 'A NOVEL METHOD FOR THE PREPARATION OF POLYMETHACRYLATES WITH NONLINEAR OPTICALLY ACTIVE SIDE GROUPS'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 569 903 B1

## Beschreibung

Die vorliegende Erfindung betrifft ein Verfahren zur Herstellung von (Meth)acrylatpolymerisaten mit seitenständigen nichtlinear optischen Chromophoren und Molekulargewichten zwischen 5000 und 5000000, die nach diesem Verfahren erhaltenen Polymerisate sowie deren Verwendung in optischen Bauelementen, insbesondere in der Nachrichtentechnik.

Polymerisate mit seitenständigen nicht linear optischen Chromophoren und deren Herstellung durch radikalisch initiierte Polymerisation von ethylenisch ungesättigten organischen Verbindungen (Methacryl- und Acrylverbindungen), die nichtlinear optische (= NLO) Chromophore als Seitengruppen tragen, sind bereits bekannt und beispielsweise beschrieben von D.R. Robello in J. Polym. Sci; Part A: Polymer Chemistry 28, 1 (1990) sowie in EP-A-0337405, EP-A-0334176, EP-A-0396172, FR-A-2630744 und FR-A-2597109.

Bei der radikalischen Polymerisation von Monomeren mit NLO-Seitengruppen erhält man jedoch infolge der retardierenden Wirkung von Nitro- und Azogruppen nur Produkte mit relativ niedrigen Molekulargewichten von bis zu etwa $\overline{M}_n = 25000$. Ein weiterer Nachteil ist, daß sich derartige Produkte nicht gut reproduzierbar herstellen lassen. Aus der US-A-4 935 292 sind zwar auch schon funktionalisierte Polymere mit nichtlinear optischen Eigenschaften bekannt, die durch polymeranaloge Umsetzung von Polystyrol, das zunächst chlormethyliert, dann in das reaktivere Jodmethylderivat überführt wird, das schließlich mit dem Thalliumsalz eines Alkoholchromophors verethert, oder durch Umsetzung mit einem Pyridiniumchromophor quaterniert wird, erhalten werden. Außerdem wird hier die Funktionalisierung von Poly (p-hydroxystyrol) angeführt, wobei über eine nucleophile Substitution des Phenolations des Poly(p-hydroxystyrol)s an das Tosylat des Chromophors das Chromophor über eine Ethergruppe an das Poly(p-hydroxystyrol) angebunden wird. Die in der US-A-4 935 292 beschriebenen Methoden zur Herstellung von Polymeren mit nichtlinear optischen Eigenschaften sind ziemlich aufwendig und bedürfen wegen der Giftigkeit des Thalliums umfangreicher Schutzmaßnahmen. Außerdem sind hier Einschränkungen hinsichtlich der erreichbaren Molekulargewichte der Polymeren und auch auf die Art der Polymeren gegeben. Über polymeranaloge Reaktionen sind neben den erwähnten Polymethacrylaten die Polyacrylate ebenfalls zugänglich. Dem US-Patent sind jedoch keine Angaben über die Molekulargewichtsverteilung und die Reproduzierbarkeit der darin beschriebenen Polymerisate zu entnehmen.

Aufgabe der vorliegenden Erfindung ist es, ein Verfahren zur Herstellung von (Meth)acrylatpolymerisaten mit seitenständigen nichtlinear optischen Chromophoren aufzuzeigen, das die oben angeführten Nachteile des vorbekannten Standes der Technik nicht oder im wesentlich verringerten Maße aufweist und sich insbesonders durch die Einfachheit des Verfahrens an sich, die gute Reproduzierbarkeit, ein hohes Molekulargewicht und eine enge Molekulargewichtsverteilung der Materialien auszeichnet. In der DE-A-41 16 594 wurde bereits die polymeranaloge Umsetzung von (Meth) acrylsäurechloridpolymerisaten mit D-ω-Hydroxyalkyl-Chromophoren oder deren Alkoholaten vorgeschlagen.

Gegenstand der vorliegenden Erfindung ist ein Verfahren zur Herstellung von (Meth)acrylat-Polymerisaten mit seitenständigen nichtlinear optischen Chromophoren und Molekulargewichten $\overline{M}_n$ zwischen 5 000 und 5000000, das dadurch gekennzeichnet ist, daß man Polymerisate des (Meth)acrylsäurechlorids in polymeranaloger Reaktion in Lösung, gegebenenfalls in Gegenwart einer zusätzlichen organischen Base, mit D-ω-Aminoalkyl-Chromophoren der allgemeinen Formel (I) umsetzt,

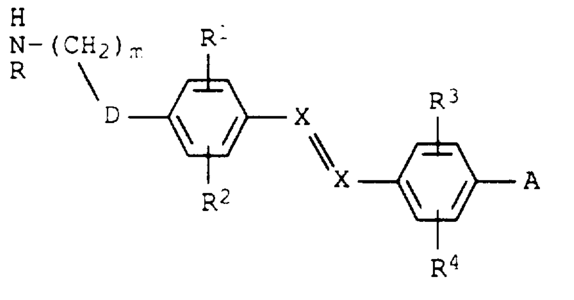

(I)

worin

D für einen Elektronendonor,

A für einen Elektronenakzeptor,

R für H, Alkyl mit 1 bis 6 Kohlenstoffatomen oder Cycloalkyl mit 5 oder 6 Kohlenstoffatomen stehen oder R mit dem N-Atom des Elektronendonors D einen Piperazinring bildet,

$R^1$, $R^2$, $R^3$ und $R^4$ untereinander gleich oder verschieden sein können und für H, Alkyl mit 1 bis 6 Kohlenstoffatomen, Cycloalkyl mit 5 oder 6 Kohlenstoffatomen, oder $R^3$ und $R^4$ für CN, $NO_2$ oder CHO stehen, oder $R^1$ mit $R^2$ bzw.

$R^3$ mit $R^4$ miteinander einen anellierten Ring bilden,

X für CH-Gruppen oder/und N-Atome und

m für eine ganze Zahl von 2 bis 11

stehen.

Als gegebenenfalls mitzuverwendende organische Base kommen tertiäre aliphatische oder aromatische Amine in Frage.

Vorzugsweise werden als nichtlinear optische D-ω-Aminoalkylchromophore der allgemeinen Formel (I) solche eingesetzt, in denen m für eine ganze Zahl von 2 bis 8 steht.

Eine vorteilhafte Ausführungsform des erfindungsgemäßen Verfahrens besteht auch darin, die nichtlinear optischen D-ω-Aminoalkylchromophore der allgemeinen Formel (I) mit Polyacrylsäurechlorid bzw. Polymethacrylsäurechlorid umzusetzen.

Eine weitere Ausgestaltung des erfindungsgemäßen Verfahrens besteht darin, daß man die Umsetzung der D-ω-Aminoalkylchromophore der allgemeinen Formel (I) mit den (Meth)acrylsäurechlorid-Polymerisaten so führt, daß nach der Umsetzung noch Säurechloridgruppen im Polymerisat vorhanden sind, die anschließend zu Carboxylgruppen hydrolysiert werden oder über eine weitere polymeranaloge Umsetzung weiter funktionalisiert werden können.

Dabei können nach der Umsetzung im Polymerisat noch vorhandenen Säurechloridgruppen über eine weitere polymeranaloge Umsetzung mit vernetzbaren Alkoholen, vernetzbaren Alkoholaten oder vernetzbaren Aminen zur Reaktion gebracht werden, wobei es sich bei den vernetzbaren Alkoholen, vernetzbaren Alkoholaten oder vernetzbaren Aminen z.B. um solche handelt, die am alkoholischen Sauerstoff bzw. am Aminstickstoff folgende Gruppierungen gebunden enthalten:

$CH_2{=}CH{-}CH_2{-}$ , 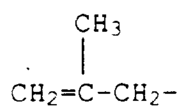 ,

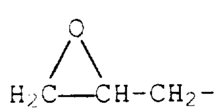 , 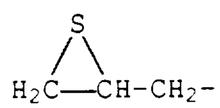 ,

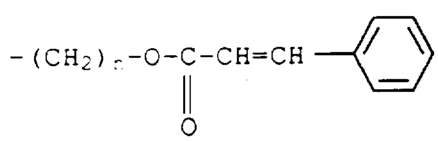 ,

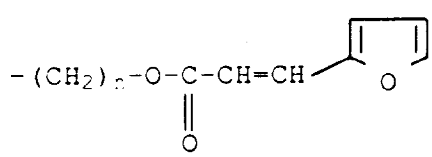 ,

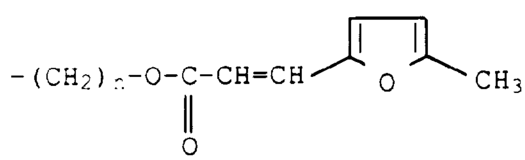 ,

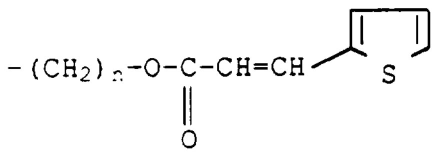

,

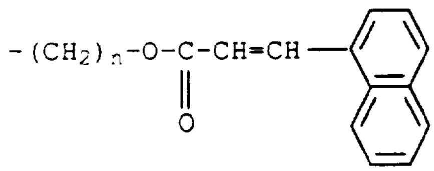

,

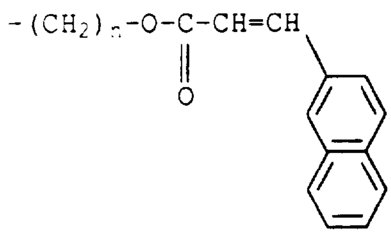

,

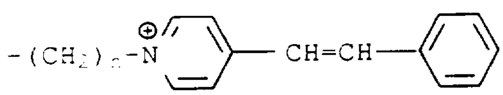

,

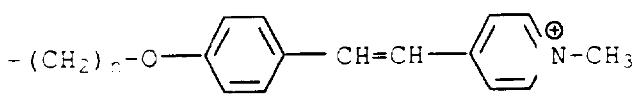

,

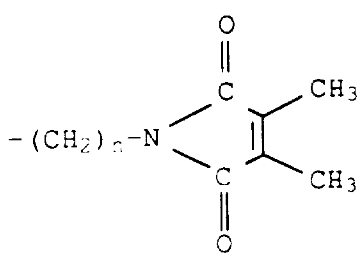

,

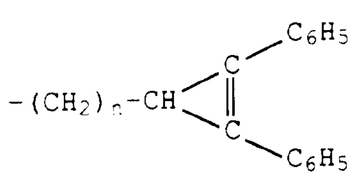

oder

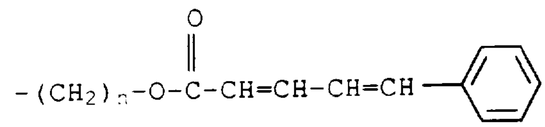

mit n = 1 bis 12.

Gegenstand der vorliegenden Erfindung sind auch die Polymerisate, die wiederkehrende Einheiten der allgemeinen Formel (II)

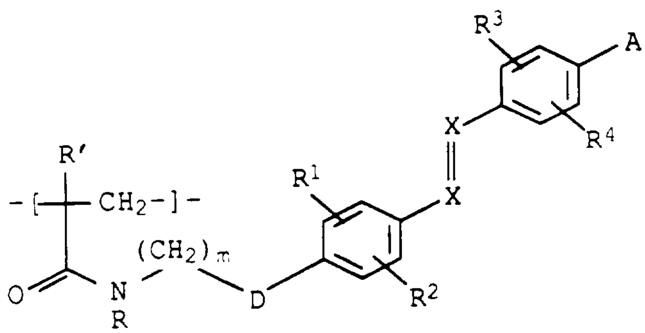

(II),

worin D, A, R, X, m, R1, R2, R3 und R4 die für Formel (I) angegebene Bedeutung haben und R' für Wasserstoff oder eine Methylgruppe steht, eingebaut enthalten oder hieraus aufgebaut sind, wobei diese Polymerisate nach dem erfindungsgemäßen Verfahren hergestellt worden sind. Die erfindungsgemäß hergestellten Polymerisate können als Elektronendonorgruppen D ein Sauerstoffatom O oder eine Gruppe $NR^5$ mit $R^5$ = $C_1$- bis $C_6$-Alkyl oder -Alkenyl, $C_5$- bis $C_7$-Cycloalkyl, Phenyl-, Benzyl-, Tolyl- oder eine vernetzungsfähigen Gruppe, insbesondere eine Vinyl-, Acryl-, Methacryl-, Oxiranyl- oder Thiiranylgruppe,

als Gruppierungen -X=X- -N=N-, -N=CH-, -CH=N- oder -CH=CH-, als Elektronenakzeptorgruppe A

H, $NO_2$, CN, 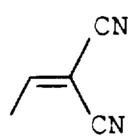 , 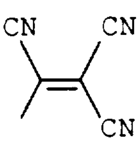 oder 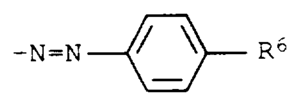

mit

R6 = H, $NO_2$, CN oder CHO enthalten.

Die erfindungsgemäß hergestellten Polymerisate können nur aus wiederkehrenden Einheiten der allgemeinen Formel (II) aufgebaut sein oder sie können zusätzlich zu den wiederkehrenden Einheiten der allgemeinen Formel (II) noch weitere wiederkehrende Comonomer-Einheiten eingebaut enthalten.

Gegenstand der vorliegenden Erfindung ist auch die Verwendung der erfindungsgemäß hergestellten nichtlinear optischen Polymerisate in optischen Bauelementen sowie deren Verwendung in der Nachrichtentechnik.

Das erfindungsgemäße Verfahren zeichnet sich insbesondere dadurch aus, daß sich auf diesem Wege gut reproduzierbar nichtlinear optische Polymerisate mit hohem Molekulargewicht herstellen lassen.

Hohe Molekulargewichte sind wünschenswert, da sich nur daraus hochwertige Filme, wie sie für Anwendungen in der nichtlinearen Optik benötigt werden, herstellen lassen. Außerdem wird die Relaxation der NLO-aktiven Gruppen nach der Ausrichtung im elektrischen Feld bei höhermolekularen Polymeren deutlich zurückgedrängt.

Während die Herstellung von polymerisierbaren ethylenisch ungesättigten monomeren Verbindungen mit nichtlinear optischen Chromophorgruppen, insbesondere hinsichtlich ihrer Reinigung, die durch Säulenchromatographie und anschließendes Umkristallisieren unter erheblichem Zeit- und Materialaufwand (großer Lösungsmittelverbrauch) erfolgen muß, sehr aufwendig ist, ist die Reinigung der zugrundeliegenden die Chromophorgruppen enthaltenden Aminoverbindungen, die durch einfaches Umkristallisieren, beispielsweise aus Toluol oder Pyridin/Ethanol (1 : 4) praktisch analysenrein erhalten werden können, viel einfacher. Auch wenn diese Aminoverbindungen noch kleine Mengen an Verunreinigungen enthalten, können sie für die polymeranaloge Umsetzung ohne Nachteile für die Folgeprodukte eingesetzt werden, was für die Herstellung der Produkte im technischen Maßstab von besonderem Vorteil ist.

Die polymeranaloge Umsetzung von Poly(meth)acrylsäurechlorid und Poly[(meth)acrylsäurechlorid-co-methylmethacrylat] mit aliphatischen Aminen zeichnet sich aus durch die sehr viel höhere Reaktionsgeschwindigkeit verglichen mit aliphatischen Alkoholen und die schonendere Reaktionsführung.

Während sich bei der Umsetzung von Alkoholen in gewissem Umfang cyclische Anhydridstrukturen bilden, die zwar nicht negativ für die Polymereigenschaften sind, jedoch die Reproduzierbarkeit der polymeranalogen Umsetzung einschränken, läßt sich dies bei Verwendung sekundärer aliphatischer Amine vermeiden. Während die NLO-aktiven Alkohole in doppeltem Überschuß eingesetzt werden müssen, kann man die Amine auch äquimolar unter Verwendung einer Hilfsbase wie z.B. Triethylamin umsetzen. Dieser Vorteil kann gerade bei schwierig synthetisierbaren, heterocyclischen NLO-Chromophoren von Bedeutung sein.

Zum erfindungsgemäßen Verfahren ist im einzelnen folgendes auszuführen.

Homo- und Copolymere des Acrylsäure- oder Methacrylsäurechlorids lassen sich nach üblichen Verfahren, beispielsweise durch radikalische Polymerisation in Lösung aus den Monomeren quantitativ herstellen. Als Lösungsmittel kommen übliche organische Lösungsmittel, wie z.B. Ether, wie Dioxan oder Tetrahydrofuran, Dimethylformamid, N-Methylpyrrolidon, aromatische Kohlenwasserstoffe, wie z.B. Benzol oder Toluol sowie Chlorbenzol und deren Gemische in Frage.

Als Comonomere, die praktisch in allen Mengenverhältnissen mit (Meth)acrylsäurechlorid copolymerisiert werden können, kommen in Frage Ester der Acryl- und der Methacrylsäure mit 1 bis 18, vorzugsweise 1 bis 8 Kohlenstoffatome enthaltenden Alkoholen, wie z.B. Methylmethacrylat, Ethylacrylat, n- und i-Butylacrylat, Hexylacrylat, 2-Ethyl-hexylacrylat sowie Vinylaromaten, wie z.B. Styrol, oder auch andere mit (Meth)acrylsäurechlorid copolymerisierbare ethylenisch ungesättigte Verbindungen sowie Gemische derartiger copolymerisierbarer ethylenisch ungesättigter organischer Verbindungen. Es ist zweckmäßig, die einzusetzenden Monomeren vor der Polymerisation nach den dem Fachmann geläufigen Methoden, z.B. durch Destillation oder Umkristallisieren zu reinigen. Die Homo- bzw. Copolymerisation des (Meth)acrylsäurechlorids erfolgt üblicherweise in Gegenwart radikalliefernder Katalysatoren, wie z.B. Azodiisobutyronitril, Peroxide, wie Dibenzoylperoxid oder Dilauroylperoxid.

Durch entsprechende Auswahl der Art und Menge an Comonomeren und der Polymerisationsbedingungen, wie Temperatur, Lösungsmittelanteil oder Polymerisationskatalysatormenge lassen sich in der dem Fachmann geläufigen Weise die Eigenschaften und Molekulargewichte der (Meth)acrylsäurechloridpolymerisate beeinflussen und gezielt einstellen.

Es ist besonders vorteilhaft, die Molekulargewichte dieser Polymerisate auf Bereiche zwischen $\overline{M}_n$ = 20 000 und 500 000, insbesondere von 30 000 bis 100 000 einzustellen.

Die Isolation der (Meth)acrylsäurechloridpolymerisate kann in üblicher Weise durch Ausfällen ihrer Lösungen in möglichst wasserfreien Lösungsmitteln, wie z.B. Methanol, Tetrahydrofuran oder Hexan und Trocknen erfolgen.

Erfindungsgemäß werden die Polymerisate des (Meth)acrylsaurechlorids in polymeranaloger Reaktion in Lösung mit D-ω-Aminoalkyl-Chromophoren der allgemeinen Formel (I) umgesetzt,

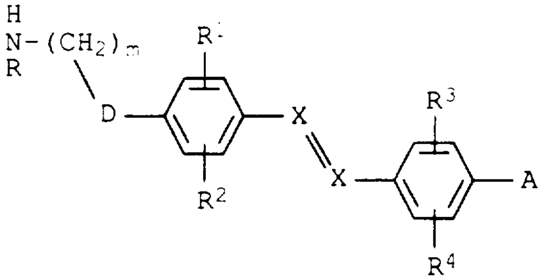

(I)

worin

D für einen Elektronendonor,

A für einen Elektronenakzeptor,

R für H, Alkyl mit 1 bis 6 Kohlenstoffatomen oder Cycloalkyl mit 5 oder 6 Kohlenstoffatomen stehen oder R mit dem N-Atom des Elektronendonors D einen Piperazinring bildet,

X für eine CH-Gruppe oder/und N-Atome steht,

$R^1$, $R^2$, $R^3$ und $R^4$ untereinander gleich oder verschieden sein können und für H, Alkyl mit 1 bis 6 Kohlenstoffatomen, Cycloalkyl mit 5 oder 6 Kohlenstoffatomen, oder $R^3$ und $R^4$ für CN, $NO_2$ oder CHO stehen, oder $R^1$ mit $R^2$ bzw.

$R^3$ mit $R^4$ miteinander einen anellierten Ring bilden,
und

m für eine ganze Zahl von 2 bis 11, vorzugsweise 2 bis 8

stehen.

Die D-ω-Aminoalkyl-Chromophore lassen sich in üblicher Weise, beispielsweise durch Mitsunobu-Reaktion (vgl. Mitsunobu, Wada, Sano, J.Am.Chem.Soc. 94 (1972), 679 aus den entsprechenden Hydroxylverbindungen herstellen.

Die Umsetzung überschüssigen D-ω-Aminoalkyl-Chromophors mit dem Homopolymer des (Meth)acrylsäurechlorids bzw. mit den Copolymeren aus (Meth)acrylsäurechlorid und Methylmethacrylat kann beispielsweise bei Temperaturen von -10 bis 100°C, vorzugsweise 20 bis 70°C in cyclischen Ethern, beispielsweise Tetrahydrofuran oder Dioxan erfolgen. Die Polymeren können beispielsweise in Methanol/HCl ausgefällt und dreimal aus THF/Methanol umgefällt werden.

Auch eine äquimolare Umsetzung der Aminoverbindungen mit (Meth)acrylsäurechlorid-homo- oder -copolymer durch polymeranaloge Reaktion in Gegenwart einer organischen Base zum Abfangen des freiwerdenden HCl führt zu den gewünschten Produkten. Als organische Basen eignen sich hierzu tertiäre aliphatische oder aromatische Amine wie z.B. Triethylamin, Dimethylanilin, Pyridin oder Dimethylaminopyridin.

In der allgemeinen Formel (I) für die D-ω-Aminoalkyl-Chromophore kann der Elektronendonor D für Sauerstoff oder eine zweiwertige Gruppe $NR^5$ stehen, wobei $R^5$ für einen Alkylrest mit 1 bis 6 Kohlenstoffatomen, beispielsweise Methyl, Ethyl, Butyl, Hexyl, einen $C_1$-$C_6$-Alkenyl, z.B. Allyl, Hexenyl, für einen Cycloalkylrest mit 5 bis 7 Kohlenstoffatomen, wie z.B. Cyclohexyl, für Phenyl, Benzyl, Tolyl oder eine vernetzungsfähige Gruppe, wie z.B. eine Vinyl-, Acryl-, Methacryl-, Oxiranyl- oder Thiiranylgruppe, beispielsweise

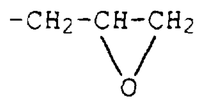 oder 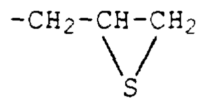

stehen.

Der Elektronenakzeptor A in der allgemeinen Formel (I) kann für Wasserstoff, $NO_2$, CN, CHO oder eine der Gruppierungen

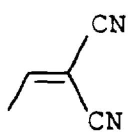 , 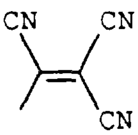 oder 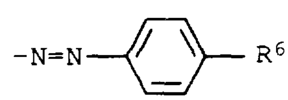

mit $R^6$ = H, $NO_2$, CN oder CHO stehen.

$R^1$, $R^2$, $R^3$ und $R^4$ in den allgemeinen Formel (I) bzw. (II) können für Wasserstoff, Alkylgruppen mit 1 bis 6 Kohlenstoffatomen, beispielsweise Methyl, Ethyl, Isopropyl, n-Butyl, Isobutyl, Hexyl, Cycloalkyl mit 5 oder 6 Kohlenstoffatomen, wie z.B. Cyclohexyl stehen oder $R^1$ kann mit $R^2$ bzw.

$R^3$ min $R^4$ miteinander einen anellierten Ring bilden, z.B. Naphthyl.

Beispiele für derartige D-ω-Aminoalkyl-Chromophore sind

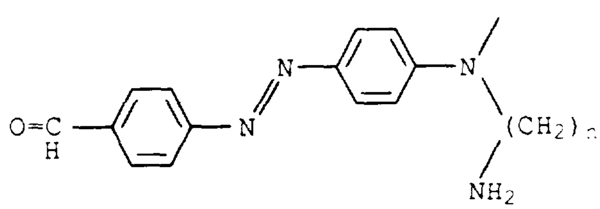

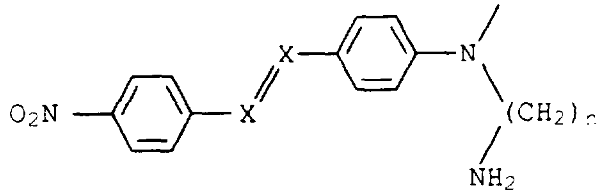

X = N oder CH  n = 2, 3, 4 oder 6

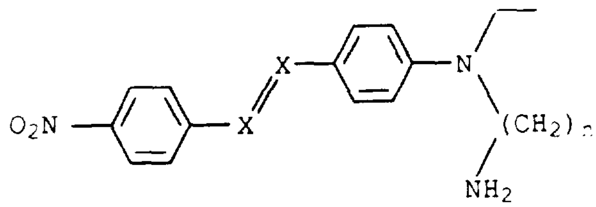

X = N oder CH  n = 2, 3, 4 oder 6

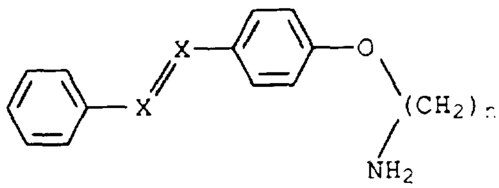

X = N oder CH  n = 3, 6, 8 oder 11

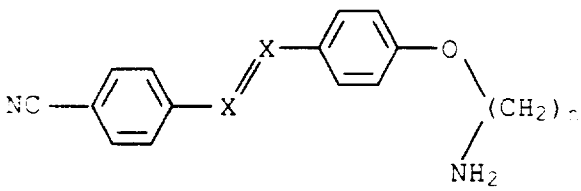

X = N oder CH  n = 3, 6, 8 oder 11

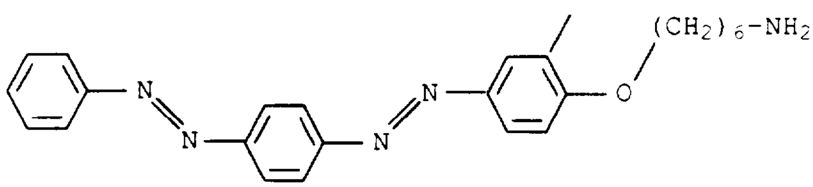

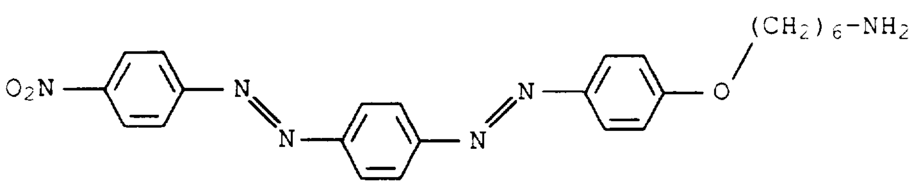

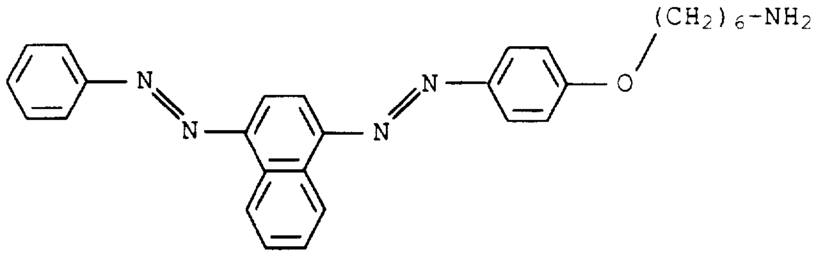

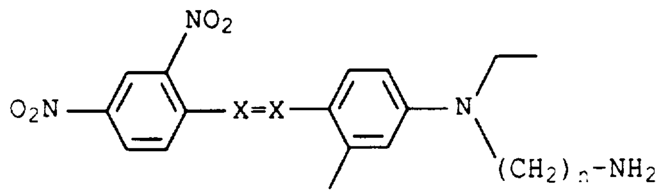

n = 2, 3 oder 6 X = N oder CH

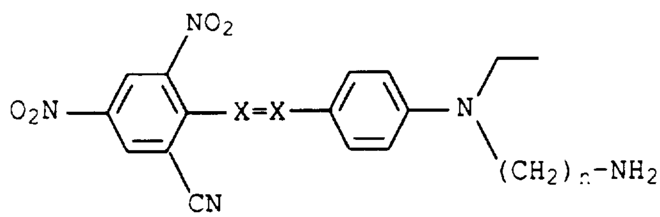

X = N oder CH n = 2, 3 oder 6

Die $NH_2$-Gruppen in den oben angegebenen Formeln können durch NHR-Gruppen ersetzt sein, worin R für Methyl, Ethyl, Propyl, Butyl, Hexyl, Cyclopentyl oder Cyclohexyl steht. Für den Fall, daß der Elektronendonor ein Stickstoffatom enthält, kann dieses auch mit $-(CH_2)_n-NHR$ (n = 2; R = $-CH_2-CH_2-$) zusammen einen Piperazinring bilden.

Ein weiterer Vorteil des erfindungsgemäßen Verfahrens ist die Möglichkeit, die Relaxation der funktionellen Gruppen zu verhindern, und zwar durch die an eine Polung angeschlossene Vernetzung des Polymeren. Die Einführung von vernetzbaren Gruppen in ein Polymethacrylat durch polymeranaloge Umsetzung ist sehr viel einfacher als die entsprechende Terpolymerisation.

Mögliche zur Vernetzung geeignete Gruppen $R^5$ der obengenannten Arten sind z.B.

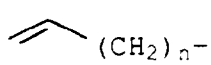 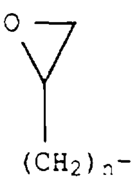 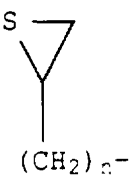

und die oben bereits genannten Zimtsäure-, Styrol-, Maleinimid- und Cyclopropengruppen.

Beispiele für Präpolymerzusammensetzungen, die für die Umsetzung mit den D-ω-Aminoalkyl-Chromophoren eingesetzt werden können sind:

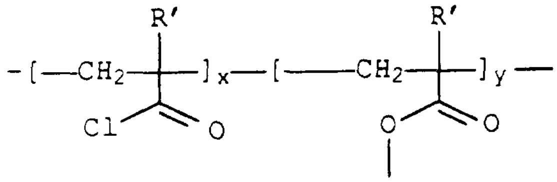

| x | y |
|---|---|
| 1,0 | 0,0 |
| 0,5 | 0,5 |
| 0,4 | 0,6 |
| 0,3 | 0,7 |
| 0,2 | 0,8 |
| 0,1 | 0,9 |

Mit dem erfindungsgemäßen Verfahren ist die Synthese genau definierter Präpolymere mit hohen Molekulargewichten und enger Molekulargewichtverteilung möglich, wobei hohe Glastemperaturen erreicht werden.

Weitere Vorteile des erfindungsgemäßen Verfahrens sind die besonders gute Reproduzierbarkeit bei der Darstellung der Polymeren, die leichtere Darstellung aufgrund der verminderten Anzahl an Reinigungsschritten der ω-Aminoalkylchromophore, die schnelle Reaktionsführung, die Einsparung von Lösungsmitteln, da Säulenchromatographien entfallen, sowie die leichte Weiterfunktionalisierung, d.h. Einführung weiterer funktioneller Gruppen.

Die im folgenden Beispiel genannten Teile und Prozente sind, soweit nicht anders angegeben, Gewichtsteile bzw. Gewichtsprozente.

Herstellung eines D-ω-Aminoalkyl-Chromophors:

1. Stufe: Herstellung des Phthalimids

In einer Stickstoffatmosphäre löst man 5,24 g (14,7 mmol) 4-[(6-Hydroxyhexyl)methylamino]-4'-nitroazobenzol in 50 ml wasserfreiem Tetrahydrofuran (THF) und gibt unter Rühren im Stickstoff-Gegenstrom 2,38 g (16,2 mmol) Phthalimid und 4,25 g (16,2 mmol) Triphenylphosphin zu. Über einen Tropftrichter läßt man langsam 2,52 ml (16,2 mmol) Diethylazodicarboxylat zutropfen. Man läßt die Reaktionslösung 24 Stunden bei Raumtemperatur rühren und bricht dann durch Zugabe von 130 ml konzentrierter NaCl-Lösung ab.

Die organische Phase wird abgetrennt und über $Na_2SO_4$ getrocknet. Nach dem Abziehen des Lösungsmittels resultieren 6,5 g (91 %) Rohprodukt. Dieses wird durch mehrmalige Kristallisation aus Essigsäureethylester gereinigt. Man erhält 3,75 g (53 %) Reinprodukt.

Charakterisierung:

$^1$H-NMR ($CDCl_3$): $\delta$ = 1,3-1,5 (m, 4H), 1,5-1,8 (m, 4H), 3,05 (s, 3H), 3,4 (t, 2H), 3,65 (t, 2H), 6,7 (dd, 2H), 7,6-7,75 (m, 2H), 7,75-7,95 (m, 6H), 8,3 (dd, 2H)
$^{13}$C NMR ($CDCl_3$): $\delta$ = 26,5, 26,6, 26,9, 28,4, 37,7, 38,6, 52,5, 111,3, 122,4, 123,1, 124,6, 126,2, 132,0, 133,8, 143,4, 147,2, 152,4, 156,8, 168,3.

2. Stufe: Hydrazinolyse des Phthalimids zur Aminoverbindung

In einer Stickstoffatmosphäre gibt man zu 3,75 g (7,72 mmol) des Phthalimids in 220 ml Ethanol 1,92 ml (38,6 mmol) Hydrazinhydrat und erhitzt zum Rückfluß. Nach 4 Stunden schaltet man die Heizung ab und läßt noch über Nacht bei Raumtemperatur weiterrühren. Nach dem Abziehen des Lösungsmittels resultieren 2,1 g (76,5 %) Rohprodukt. Zur Reinigung löst man das Rohprodukt in ca. 1 l halbkonzentrierter heißer Salzsäure und extrahiert nach dem Abkühlen der Lösung viermal mit jeweils 100 ml Ether zur Entfernung von Verunreinigungen. Die wäßrige Lösung wird mit 2N NaOH alkalisch gemacht, wobei das Amin ausfällt. Man saugt den Niederschlag ab und trocknet das Produkt. Zur Entfernung von überschüssigem NaOH löst man in THF und fällt die Aminoverbindung in Wasser aus.

Nach Absaugen und Trocknen resultieren 1,5 g (55 %) 4-[(6-Aminohexyl)methylamino]-4'-nitroazobenzol.

Charakterisierung:

$^1$H-NMR ($CDCl_3$): $\delta$ = 1,1-1,7 (m, 8H), 2,5 (br, 2H), 3,1 (br, 3H), 3,5 (br, 2H), 6,7 (dd, 2H), 7,7-8,1 (m, 4H), 8,3 (dd, 2H)
$^{13}$C NMR ($d_8$-THF): $\delta$ = 27,7, 27,8, 28,0, 31,5, 35,0, 38,7, 43,1, 46,6, 53,1, 112,1, 123,3, 125,3, 126,7, 144,5, 148,4, 153,7, 157,7.

Herstellung verschiedener Methacrylsäurechlorid-homo- bzw. -copolymerer durch radikalische Polymerisation:

(I): x = 1,0; y = 0,0; R' = Methyl

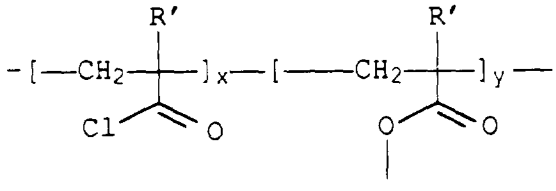

In ein 100 ml Schlenkrohr füllt man 24,15 g (0,25 mol) frisch destilliertes Methacrylsäurechlorid, 0,41 g (0,0025 mol) Azodiisobutyronitril (= AIBN) und 25 ml Dioxan. Die Lösung wird sorgfältig entgast und dann bei 60°C 48

Stunden lang polymerisiert. Zur Aufarbeitung verdünnt man die viskose Lösung mit Dioxan und fällt das Polymere durch Eingießen der Lösung in trockenes Hexan aus. Das Produkt wird abgesaugt und unter Stickstoff aufbewahrt, um eine Hydrolyse der Säurechloridgruppen zu vermeiden.
Ausbeute: 21 g (81 %) weißes Pulver
IR (Film) : 2996, 2975, 1786, 1483, 1446, 1393, 960, 851 $cm^{-1}$.

| Elementaranalyse: $(C_4H_5OCl)_n$ 104,54 | | | | |
|---|---|---|---|---|
| berechnet: | C 45,96 | H 4,82 | O 15,30 | Cl 33,91 |
| gefunden: | C 46,90 | H 5,00 | O 15,3 | Cl 33,0 |

GPC : $\overline{M}_n$ = 33 000; $\overline{M}_w$ = 68 000; $\overline{M}_w/\overline{M}_n$ = 2,1

(II): x = 0,2; y = 0,8
4,8 g (0,05 mol) Methacrylsäurechlorid, 21,2 g (0,2 mol) Methylmethacrylat und 0,41 g (0,0025 mol) AIBN werden in einem Schlenkrohr in 100 ml Dioxan gelöst und nach dem Entgasen 48 Stunden lang bei 60°C polymerisiert. Zur Aufarbeitung wird das Produkt in trockenem Hexan ausgefällt.
Ausbeute: 22 g (88 %) weißes Pulver
IR (Film): 2997, 2951, 1788, 1730, 1485, 1448, 1435, 1244, 1194, 1152, 964, 847, 756 $cm^{-1}$.

| Elementaranalyse: | | | | |
|---|---|---|---|---|
| berechnet: | C 57,18 | H 7,40 | O 28,63 | Cl 6,78 |
| gefunden: | C 57,21 | H 7,33 | O 28,5 | Cl 6,75 |

GPC : $\overline{M}_n$ = 35 000; $\overline{M}_w$ = 85 000; $\overline{M}_w/\overline{M}_n$ = 2,43

Beispiel 1

Polymeranaloge Umsetzung des Präpolymeren (x = 0,2, y = 0,8) mit dem Chromophor

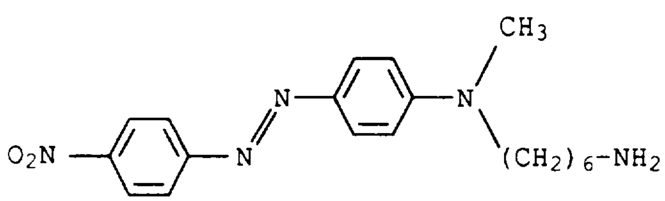

Zu einer Lösung von 0,21 g (0,6 mmol) 4-(N-Aminohexyl-N-mezlnylamino)-4'-nitroazobenzol in 20 ml trockenem Dioxan gibt an in einer Stickstoffatmosphäre unter Wasserausschluß 0,24 g (2,4 mmol) Triethylamin und erhitzt auf 70°C. Anschließend tropft man unter Rühren 0,3 g (3 mmol) eines Copolymeren aus 80 % Methylmethacrylat (= MMA) und 20 % Methacrylsäurechlorid in 20 ml Dioxan gelöst zu und läßt eine Stunde bei Raumtemperatur rühren. Durch Eingießen der so erhaltenen Lösung in ein Gemisch aus 300 ml Methanol und 1 ml konz. Salzsäure (36 %ig) wird das Polymer ausgefällt, dann abgesaugt, im Exsikkator getrocknet und dreimal aus Tetrahydrofuran in Methanol umgefällt und getrocknet.
Ausbeute: 0,4 g (82 %) Polymer
IR (Film): 2947, 1730 (Ester), 1659 (Amid), 1601, 1587, 1518, 1447, 1379, 1339, 1310, 1244, 1192, 1153, 1138, 1103 $cm^{-1}$
$^1$H-NMR ($CDCl_3$): δ = 0,6-2,3 (m, br, aliph. CH), 3,05 (br, $-NCH_3$), 3,2 (br, $-CH_2NHCO$), 3,4 (br, $-CH_2N(CH_3)-$), 3,55 (br, $-OCH_3$), 5,6 (br, NH), 6,7 (br, arom. CH), 7,9 (br, arom. CH), 8,3 (br, arom. CH)
GPC (PMMA-Eichung) : $\overline{M}_n$ = 34 200, $\overline{M}_w$ = 114 500, $\overline{M}_w/\overline{M}_n$ = 3,35
Analog lassen sich D-ω-Aminoalkyl-Chromophore der oben angegebenen Formel, wobei der Rest

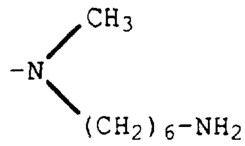

durch Reste

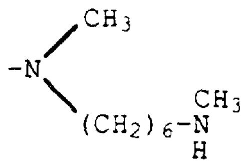 , 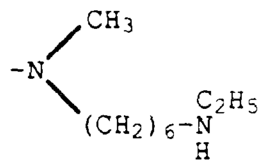 oder 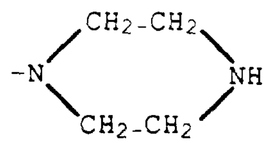

ersetzt ist, in polymeranaloger Reaktion mit (Meth)acrylsäurechloridhomo- oder -copolymer umsetzen.

**Patentansprüche**

1. Verfahren zur Herstellung von (Meth)acrylat-Polymerisaten mit seitenständigen nichtlinear optischen Chromophoren und Molekulargewichten $\overline{M}_n$ zwischen 5000 und 5000000, dadurch gekennzeichnet, daß man Polymerisate des (Meth)acrylsäurechlorids in polymeranaloger Reaktion in Lösung, gegebenenfalls in Gegenwart einer zusätzlichen organischen Base, mit D-ω-Aminoalkyl-Chromophoren der allgemeinen Formel (I) umsetzt,

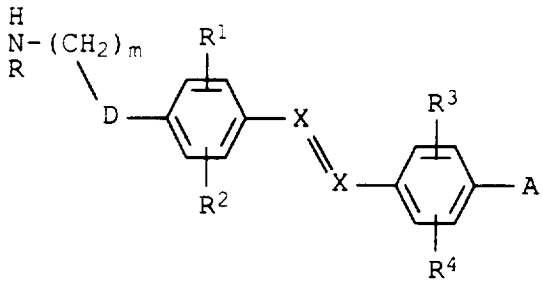 (I)

worin

D für einen Elektronendonor,

A für einen Elektronenakzeptor,

R für H, Alkyl mit 1 bis 6 Kohlenstoffatomen oder Cycloalkyl mit 5 oder 6 Kohlenstoffatomen stehen oder R mit dem N-Atom des Elektronendonors D einen Piperazinring bildet,

$R^1$, $R^2$, $R^3$ und $R^4$ untereinander gleich oder verschieden sein können und für H, Alkyl mit 1 bis 6 Kohlenstoffatomen, Cycloalkyl mit 5 oder 6 Kohlenstoffatomen, oder $R^3$ und $R^4$ für CN, $NO_2$ oder CHO stehen, oder $R^1$ mit $R^2$ bzw. $R^3$ mit $R^4$ miteinander einen anellierten Ring bilden,
X für CH-Gruppen oder/und N-Atome
und

m für eine ganze Zahl von 2 bis 11 stehen.

2. Verfahren nach Anspruch 1, dadurch gekennzeichnet, daß man als zusätzliche organische Base ein tertiäres aliphatisches oder aromatisches Amin einsetzt.

3. Verfahren nach Anspruch 1 oder 2, dadurch gekennzeichnet, daß man als nichtlinear optische D-ω-Aminoalkylchromophore der allgemeinen Formel (I) solche einsetzt, in denen m für eine ganze Zahl von 2 bis 8 steht.

4. Verfahren nach Anspruch 1, 2 oder 3, dadurch gekennzeichnet, daß man nichtlinear optische D-ω-Aminoalkylchromophore der allgemeinen Formel (I) mit Polyacrylsäurechlorid umsetzt.

5. Verfahren nach Anspruch 1, 2 oder 3, dadurch gekennzeichnet, daß man nichtlinear optische D-ω-Aminoalkylchromophore der allgemeinen Formel (I) mit Polymethacrylsäurechlorid umsetzt.

6. Verfahren nach einem der Ansprüche 1 bis 5, dadurch gekennzeichnet, daß man die Umsetzung der D-ω-Aminoalkyl-Chromophoren der allgemeinen Formel (I) mit den (Meth)-acrylsäurechlorid-Polymerisaten so führt, daß nach der Umsetzung noch Säurechloridgruppen im Polymerisat vorhanden sind, die anschließend zu Carboxylgruppen hydrolysiert werden oder über eine weitere polymeranaloge Umsetzung weiter funktionalisiert werden können.

7. Verfahren nach Anspruch 6, dadurch gekennzeichnet, daß die nach der Umsetzung im Polymerisat noch vorhandenen Säurechloridgruppen über eine weitere polymeranaloge Umsetzung mit vernetzbaren Alkoholen, vernetzbaren Alkoholaten oder vernetzbaren Aminen zur Reaktion gebracht werden.

8. Verfahren nach Anspruch 7, dadurch gekennzeichnet, daß es sich bei den vernetzbaren Alkoholen, vernetzbaren Alkoholaten oder vernetzbaren Aminen um solche handelt, die am alkoholischen Sauerstoff bzw. am Aminstickstoff folgende Gruppierungen gebunden enthalten:

$CH_2=CH-CH_2-$ , 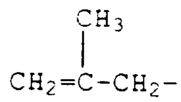 ,

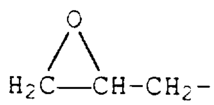 , 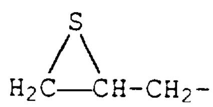 ,

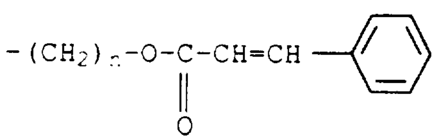 ,

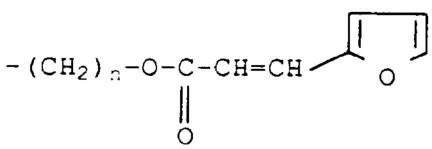 ,

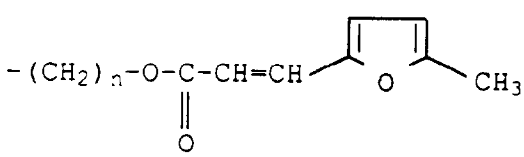 ,

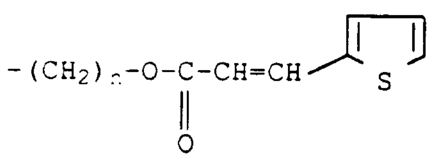 ,

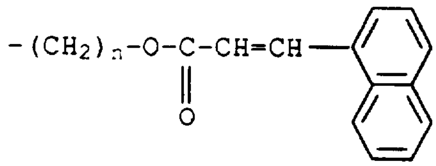

,

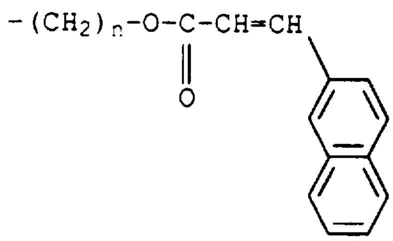

,

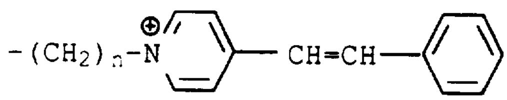

,

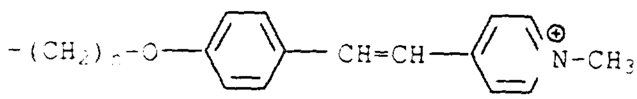

,

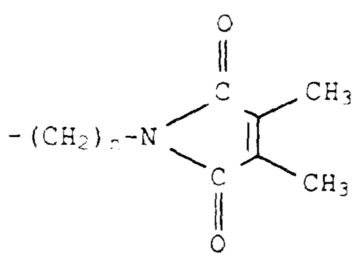

,

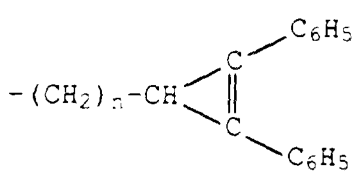

oder

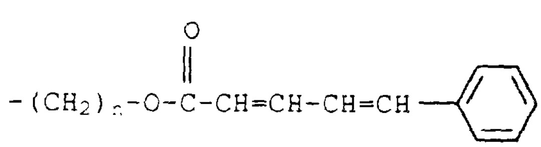

mit n = 1 bis 12.

**9.** Polymerisate, die wiederkehrende Einheiten der allgemeinen Formel (II) eingebaut enthalten oder hieraus aufgebaut sind

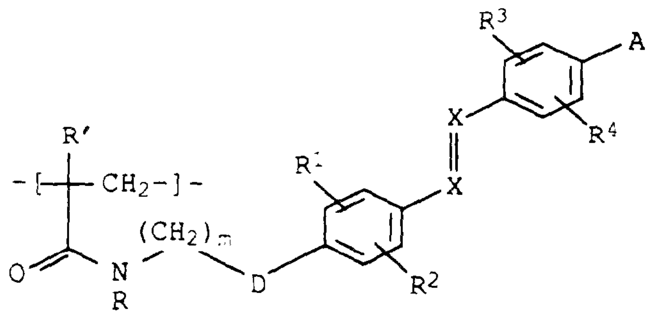

(II),

worin D, A, R, X, m, R1, R2, R3 und R4 die in Anspruch 1 angegebene Bedeutung haben und R' für ein Wasserstoffatom oder eine Methylgruppe steht, dadurch gekennzeichnet, daß sie nach einem Verfahren gemäß einem der Ansprüche 1 bis 8 hergestellt worden sind.

**10.** Polymerisate nach Anspruch 9, dadurch gekennzeichnet, daß

D für $NR^5$ oder O,

-X=X- für -N=N-, -N=CH-, -CH=N- oder -CH=CH-,

A für H, $NO_2$, CN, CHO,

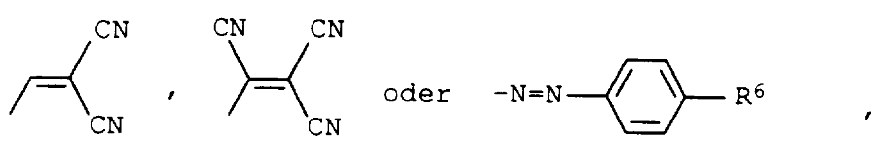

$R^5$ für $C_1$-$C_6$-Alkyl oder -Alkenyl, $C_5$- bis $C_7$-Cycloalkyl, Phenyl, Benzyl, Tolyl oder eine vernetzungsfähige Gruppe und

$R^6$ für H, $NO_2$, CN oder CHO stehen.

**11.** Polymerisate nach Anspruch 10, dadurch gekennzeichnet, daß sie als vernetzungsfähige Gruppe $R^5$ eine Vinyl-, Methacryl-, Acryl-, Oxiranyl- oder Thiiranylgruppe enthalten.

**12.** Polymerisate nach einem der Ansprüche 9 bis 11, dadurch gekennzeichnet, daß sie nur aus wiederkehrenden Einheiten der allgemeinen Formel (II) aufgebaut sind.

**13.** Polymerisate nach einem der Ansprüche 9 bis 11, dadurch gekennzeichnet, daß sie zusätzlich zu den wiederkehrenden Einheiten der allgemeinen Formel (II) noch weitere wiederkehrende Comonomer-Einheiten eingebaut enthalten.

**14.** Verwendung der nichtlinear optischen Polymerisate nach einem der Ansprüche 9 bis 13, in optischen Bauelementen.

**15.** Verwendung der optischen Bauelemente nach Anspruch 14 in der Nachrichtentechnik.

## Claims

**1.** A process for preparing (meth)acrylate polymers with lateral non-linear optical chromophores and molecular weights

$\overline{M}_n$ of from 5,000 to 5,000,000, which comprises reacting polymers of (meth)acryloyl chloride in solution, in the presence or absence of an additional organic base, with D-ω-aminoalkyl chromophores of the formula (I)

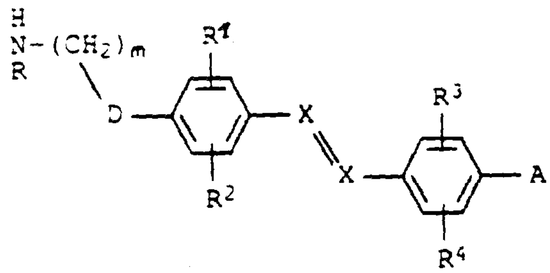

(I)

where

D is an electron donor,

A is an electron acceptor,

R is H, alkyl of 1-6 carbons or cycloalkyl of 5 or 6 carbons, or R forms with the nitrogen of the electron donor D a piperazine ring,

$R^1$, $R^2$, $R^3$ and $R^4$ can be identical or different and are each H, alkyl of 1-6 carbons, cycloalkyl of 5 or 6 carbons, or $R^3$ and $R^4$ are each CN, $NO_2$ or CHO, or $R^1$ forms with $R^2$, and/or $R^3$ forms with $R^4$, a fused-on ring,

X is CH and/or N, and

m is an integer from 2 to 11.

**2.** A process as claimed in claim 1, wherein a tertiary aliphatic or aromatic amine is employed as additional organic base.

**3.** A process as claimed in claim 1 or 2, wherein m in the formula (I) of the non-linear optical D-ω-aminoalkyl chromophores used is an integer from 2 to 8.

**4.** A process as claimed in claim 1, 2 or 3, wherein non-linear optical D-ω-aminoalkyl chromophores of the formula (I) are reacted with polyacryloyl chloride.

**5.** A process as claimed in claim 1, 2 or 3, wherein non-linear optical D-ω-aminoalkyl chromophores of the formula (I) are reacted with polymethacryloyl chloride.

**6.** A process as claimed in any of claims 1 to 5, wherein the reaction of the D-ω-aminoalkyl chromophores of the formula (I) with the (meth)acryloyl chloride polymers is carried out in such a way that, after the reaction, the polymer still contains acid chloride groups which can subsequently be hydrolyzed to carboxyl groups or further functionalized by another reaction.

**7.** A process as claimed in claim 6, wherein acid chloride groups which are still present in the polymer after the reaction are reacted with crosslinkable alcohols, crosslinkable alcoholates or crosslinkable amines.

**8.** A process as claimed in claim 7, wherein the crosslinkable alcohols, crosslinkable alcoholates or crosslinkable amines contain the following groups bonded to the oxygen of the alcohol or nitrogen of the amine:

$CH_2=CH-CH_2-$ , 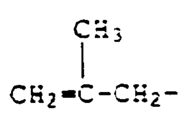 ,

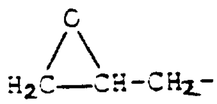 , 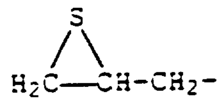 ,

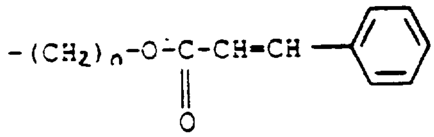 ,

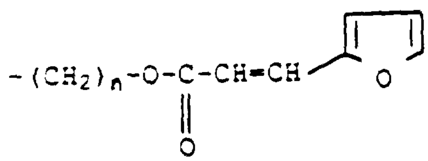 ,

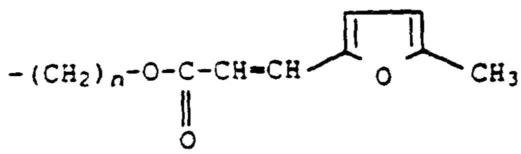 ,

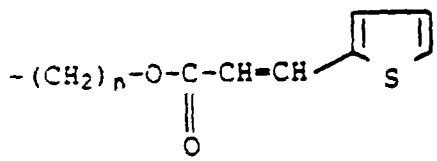 ,

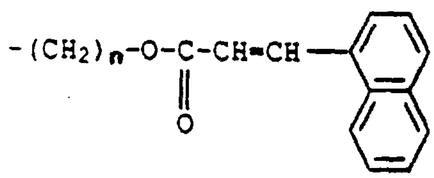 ,

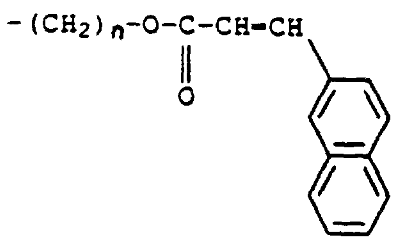 ,

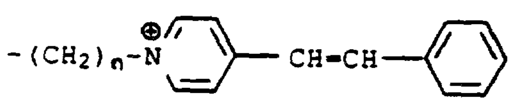 ,

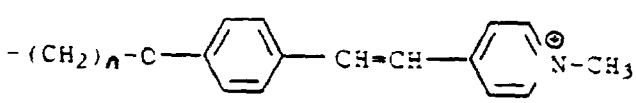 ,

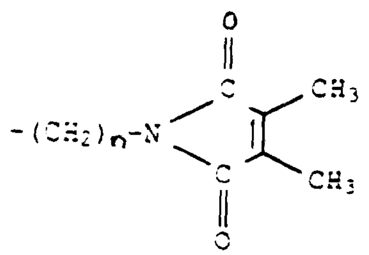,

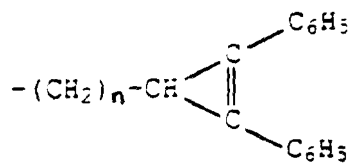

or

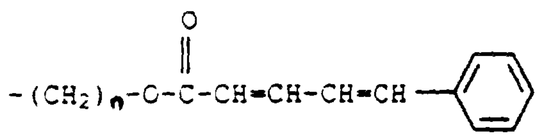

with n = 1-12.

**9.** A polymer which contains or is composed of repeating units of the formula (II)

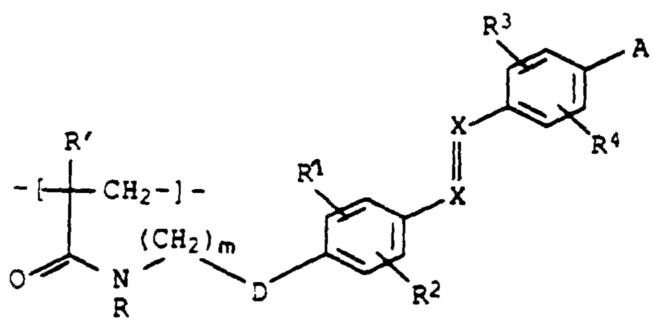

(II)

where D, A, R, X, m, $R^1$, $R^2$, $R^3$ and $R^4$ have the meanings stated in claim 1, and R' is hydrogen or methyl, and which has been prepared by a process as claimed in any of claims 1 to 8.

**10.** A polymer as claimed in claim 9, wherein

D is $NR^5$ or O,

-X=X- is -N=N-, -N=CH-, -CH=N- or -CH=CH-,

A is H, $NO_2$, CN, CHO,

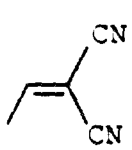, 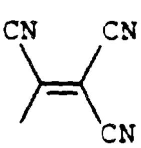 or 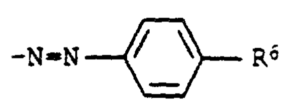,

$R^5$ is $C_1$-$C_6$-alkyl or -alkenyl, $C_5$-$C_7$-cycloalkyl, phenyl, benzyl, tolyl or a crosslinkable group, and

$R^6$ is H, $NO_2$, CN or CHO.

**11.** A polymer as claimed in claim 10, which contains as crosslinkable group $R^5$ a vinyl, methallyl, allyl, oxiranyl or thiiranyl group.

**12.** A polymer as claimed in any of claims 9 to 11, which is composed only of repeating units of the formula (II).

**13.** A polymer as claimed in any of claims 9 to 11, which, in addition to the repeating units of the formula (II), also contains other repeating comonomer units.

**14.** The use of the non-linear optical polymers as claimed in any of claims 9 to 13 in optical components.

**15.** The use of the optical components as claimed in claim 14 in communications technology.

**Revendications**

**1.** Procédé de préparation de polymérisats de (méth)acrylate à chromophores latéraux optiquement non linéaires et aux poids moléculaires $\overline{M}_n$ compris entre 5000 et 5000000, caractérisé par le fait que l'on fait réagir, en solution, éventuellement en présence d'une base organique additionnelle, des polymérisats du chlorure d'acide (méth)acrylique, en une réaction analogue à une polymérisation, avec des D-ω-aminoalkyl-chromophores, de formule générale (I)

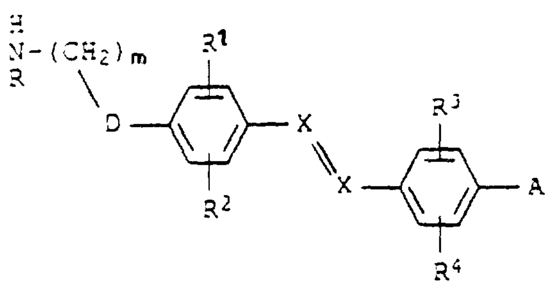

(I)

dans laquelle

D est un donneur d'électrons

A est un accepteur d'électrons,

R est mis pour H, alkyle ayant 1 à 6 atomes de carbone ou cycloalkyle ayant 5 ou 6 atomes de carbone, ou R forme un cycle pipérazine avec l'atome N du donneur d'électrons D,

$R^1$, $R^2$, $R^3$ et $R^4$ peuvent être identiques ou différents les uns par rapport aux autres et sont mis pour H, alkyle ayant 1 à 6 atomes de carbone, cycloalkyle ayant 5 ou 6 atomes de carbone, ou $R^3$ et $R^4$ représentent CN, $NO_2$ ou CHO ou $R^1$ forme avec $R^2$, ou $R^3$ avec $R^4$ un anneau accolé,

X est mis pour des groupes CH et/ou des atomes N

et

m représente un nombre entier allant de 2 à 11.

**2.** Procédé selon la revendication 1, caractérisé par le fait que l'on utilise, comme base organique additionnelle, une amine aliphatique ou aromatique tertiaire.

**3.** Procédé selon l'une des revendications 1 ou 2, caractérisé par le fait que l'on utilise, comme D-ω-aminoalkyl-chromophores optiquement non linéaires, de formule générale (I), des composés dans lesquels m représente un nombre

entier allant de 2 à 9.

**4.** Procédé selon l'une des revendications 1, 2 ou 3, caractérisé par le fait que l'on fait réagir des D-ω-aminoalkyl-chromophores optiquement non linéaires, de formule générale (I), avec du chlorure d'acide polyacrylique.

**5.** Procédé selon l'une des revendications 1, 2 ou 3, caractérisé par le fait que l'on fait réagir des D-ω-aminoalkyl-chromophores de formule générale (I) avec du chlorure d'acide polyméthacrylique.

**6.** Procédé selon l'une des revendications 1 à 5, caractérisé par le fait que l'on mène la réaction des D-ω-aminoalkyl-chromophores de formule générale (I) avec les polymérisats du chlorure d'acide (méth)acrylique de manière telle que, après la réaction, il subsiste dans le polymérisat encore des groupes chlorure d'acide qui sont ensuite hydrolysés en groupes carboxyle ou peuvent être fonctionnalisés davantage par l'intermédiaire d'une autre réaction analogue à une polymérisation.

**7.** Procédé selon la revendication 6, caractérisé par le fait que les groupes chlorure d'acide subsistant encore dans le polymérisat après la réaction sont mis à réagir, en une réaction supplémentaire analogue à une polymérisation, avec des alcools réticulables, alcoolates réticulables ou amines réticulables.

**8.** Procédé selon la revendication 7, caractérisé par le fait que pour les alcools, alcoolates ou amines réticulables, il s'agit de composés contenant, liés, les groupements suivants sur l'oxygène alcoolique ou l'azote d'amine :

$CH_2=CH-CH_2-$ , 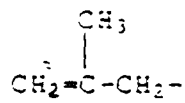 ,

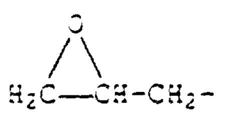 , 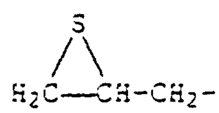 ,

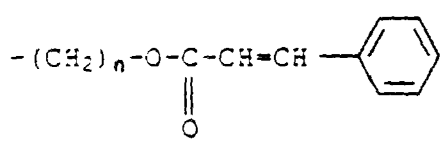 ,

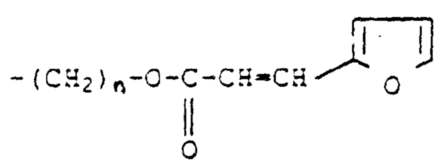 ,

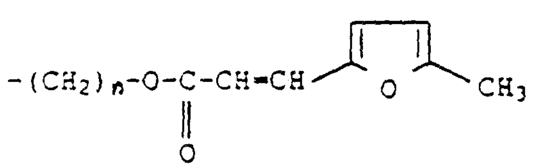 ,

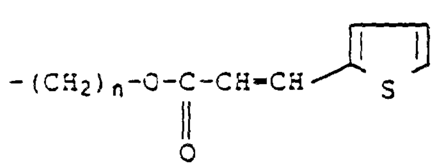 ,

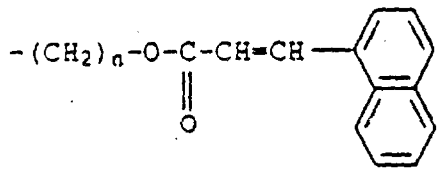 ,

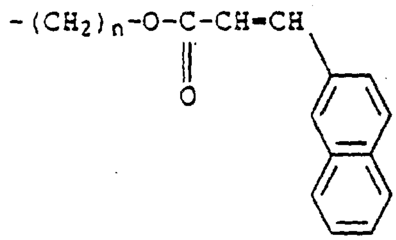 ,

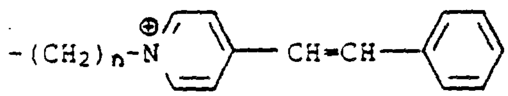 ,

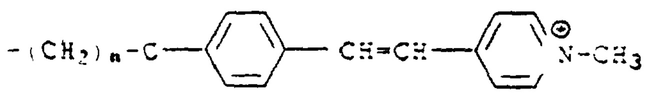 ,

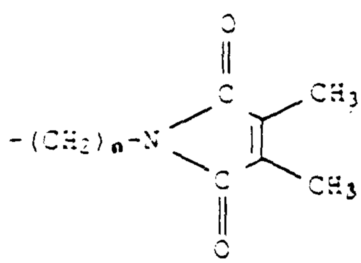 ,

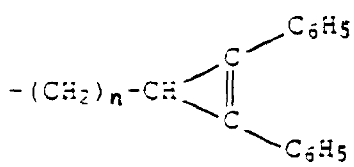

ou

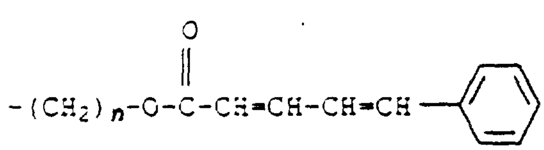

avec n = 1 à 12.

**9.** Polymérisats contenant, incorporées, des unités répétitives de formule générale (II) ou étant constitués de ces unités

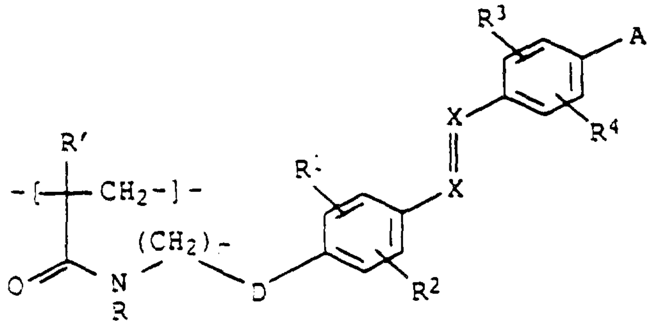

(II),

dans laquelle D, A, R, X, m, $R^1$, $R^2$, $R^3$ et $R^4$ ont les significations données dans la revendication 1 et R' est mis pour un atome d'hydrogène ou un groupe méthyle, caractérisés par le fait qu'ils ont été préparés par un procédé selon l'une des revendications 1 à 8.

**10.** Polymérisats selon la revendication 9, caractérisés en ce que

D = $NR^5$ ou 0,

-X=X- = -N=N-, -N=CH-, -CH=N- ou -CH=CH-,

A = H, $NO_2$, CN, CHO,

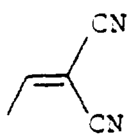

,

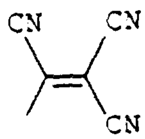

ou

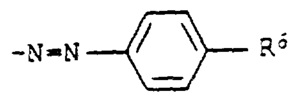

$R^5$ = alkyle ou alcényle en C1-C6, cycloalkyle en C5-C7, phényle, benzyle, tolyle ou un groupe réticulable et

$R^6$ = H, $NO_2$, CN ou CHO.

**11.** Polymérisats selon la revendication 10, caractérisés par le fait qu'ils contiennent, comme groupe réticulable $R^5$, un groupe vinyle, méthacryle, acryle, oxiranyle ou thiiranyle.

**12.** Polymérisats selon l'une des revendications 9 à 11, caractérisés par le fait qu'ils sont constitués exclusivement d'unités répétitives de formule générale (II).

**13.** Polymérisats selon l'une des revendications 9 à 11, caractérisés par le fait que, additionnellement aux unités répétitives de formule générale (II), ils contiennent encore, incorporées, des unités comonomères répétitives.

**14.** Utilisation des polymérisats optiquement non linéaires selon l'une des revendications 9 à 13 dans des éléments de construction optiques.

**15.** Utilisation des éléments de construction optiques selon la revendication 14 dans la télécommunication.